# EUROPEAN PATENT APPLICATION

(11) **EP 2 701 338 A1**
(43) Date of publication of application: **26.02.2014**
(21) Application number: 13181625.8
(22) Date of filing: 23.08.2013
(51) Int. Cl.: H04L 12/10, H04L 12/40, H04L 12/28, G06F 1/26

(54) **Power over ethernet systems**

(30) Priority: 24.08.2012 GB 201215165
(71) Applicant: Zeta Specialist Lighting Limited, Bicester Oxfordshire OX26 4LD (GB)
(72) Inventor: Vijayakumar, Prasanna, Milton Keynes, MK9 2PT (GB)
(74) Representative: Ramsay, Laura Anne

(57) **Abstract**

A Power over Ethernet (PoE) system comprises a solar module (2) comprising at least one photovoltaic cell for generating DC power, DC power management means (7) connected to the solar module (2), and a PoE network (12) connected to the DC power management means (7) to deliver DC power to one or more light fixtures (14a, 14b, 14c). A power injection system (8) and central PoE control switch (10) can assist in controlling the distribution of DC power as well as managing data connections in the PoE network (12).

## Description

The present invention relates to Power over Ethernet (PoE) systems, in particular (but not exclusively) to PoE systems suitable for lighting networks and light fixtures in a commercial and/or domestic setting.

Power over Ethernet (PoE) technology allows electrical power to be passed, together with data, on Ethernet cables such as CAT5. PoE makes use of an Ethernet cable's four twisted pairs - with only two of the pairs used for data, there are spare pairs available to carry power. There are currently two IEEE standards - IEEE 802.3af and IEEE 802.3at - which both allow one of the spare pairs of conductors to carry power.

The original 2003 Standard IEEE 802.3af can provide up to 15 W of DC power rated at 44 V and 350 mA. Only 12.95 W is assured to be available at the powered device as some power is dissipated in the cable. The 2009 Standard IEEE 802.3at, also known as PoE+ or PoE Plus, provides up to 30 W of DC power. PoE is already used to meet the low power demands of internet-connected devices such as VoIP telephones, wireless LAN access points, cameras, and remote Ethernet switches. Future standards may extend POE to higher powers, for example the proposed Power over HDBaseT (POH) standard enables the transfer of DC power in conjunction with data signals over a single Ethernet cable to a distance of up to 100 m. The POH standard is based on the IEEE 802.3at standard with modifications to enable safe delivery of up to 100 W over the four pairs of the Ethernet cable.

There are now a number of non-standard variants for PoE, and Cisco recently announced a universal PoE variant (UPOE) that extends the PoE+ standard to double the power per port to up to 60 W using two pairs of conductors from a CAT5e or CAT6 Ethernet cable. However, up until now any PoE networks have relied on an AC/DC converter to covert the mains AC power supply to DC power for transmission over the PoE network to internet-connected devices. A problem with mains-supplied power is that it typically suffers from surges and variations which can damage some devices. Any interruptions in the mains power supply, as are often experienced in developing countries, also prevent the PoE network from operating. Furthermore, it may not be considered environmentally friendly to use the mains electricity supply as conventional power stations contribute to carbon emissions.

There remains a need for a PoE system that mitigates at least some of the drawbacks discussed above.

According to a first aspect of the present invention there is provided a Power over Ethernet (PoE) system comprising: a solar module comprising at least one photovoltaic cell for generating DC power, DC power management means connected to the solar module, and a PoE network connected to the DC power management means to deliver DC power to one or more light fixtures.

The present invention takes advantage of developments such as Cisco UPoE that extend the power available over a PoE network. The Applicant has recognised that a PoE network can be used to power light fixtures (and other devices) that do not necessarily have an internet connection. Light fixtures using high-efficiency light sources, such as light emitting diodes (LEDs) or DC fluorescent bulbs rather than incandescent bulbs, can run at relatively low powers e.g. 60 W or less. An advantage of using a solar module to generate DC power is that it avoids the need for mains-supplied power, which typically suffers from surges and variations that can in particular damage DC-powered devices such as LEDs that require a constant current for operation.

Furthermore it will be appreciated that the present invention provides a more efficient PoE system for supplying DC power to light fixtures or even other low power devices. As the solar module generates DC power that can be distributed directly via the PoE network, a conversion from AC power is not necessary and the system can be independent of the mains power supply and any supply interruptions. Use of such a system can help to reduce carbon emissions. An increasing number of high-efficiency homes are now being built or refurbished with solar modules to provide a renewable supply of electrical power.

An advantage of providing DC power management means between the solar module and the PoE network is that it can be used to ensure the DC power is, normally, continuously supplied to the PoE network and/or at a constant power level. The DC power management means can therefore be important for making the PoE system reliable enough to support a power supply network for the light fixture(s) in a domestic or industrial building, where lighting must be available on demand at all times and have the desired brightness. This can be contrasted, for example, with some solar-powered lighting such as is used outdoors e.g. in gardens where there is no power management and the lights might be dim or unpowered if the solar module is unable to meet power demands.

It is an advantage of using a PoE network that the light fixture(s) can be controlled by a data connection shared with the DC power supply. This can enable the light fixtures to be turned on and off not only by local switches but also using a central control switch (as will be described in more detail below). Preferably the connections to the PoE network include an internet connection, thereby enabling remote internet control. Internet-enabled devices such as PCs, smart phones or tablets, and smart switches, may therefore be able to connect to the PoE network and be used to control selected ones of the light fixture(s). Such "smart" control represents a marked departure from a conventional lighting network, especially in a domestic setting, where the light fixture(s) are each individually connected to the mains power supply (or distribution board) and can only be controlled one by one by local switches.

In a preferred set of embodiments the DC power management means comprises one or more storage cells for storing DC power generated by the solar module. The storage cell(s) enable power generated e.g. during the day to be stored locally for use by the system at another time e.g. at night. This contributes to the efficiency of the system as there is no need to convert the DC power for distribution back to the mains power grid. The storage cell(s) contribute to making the system more reliable by helping the DC power management means to provide a buffer to ensure that preferably a continuous and constant DC power level is provided to the PoE network.

The DC power management means may comprise a transformer e.g. to convert the 375 V typically generated by the photovoltaic (PV) cell(s) to a level suitable for the PoE network. Where storage cell(s) are provided, they may be connected to the solar module by a transformer or other voltage control means such as a solar charge controller. Accordingly the DC power management means may comprise a charge controller connected between the solar module and the one or more storage cells. A charge controller, such as a PWM (pulse width modulation) solar charge controller, can provide a regulated DC output and store excess energy in the storage cell(s) as well as monitoring the battery voltage to prevent under/over charging. In a preferred set of embodiments the DC power management means comprises a MPPT charge controller connected between the solar module and the one or more storage cells. A MPPT (maximum power point tracking) charge controller can advantageously convert the incoming power from the solar module into an optimum voltage to charge the storage cell(s). MPPT is an electronic tracking technique that can be used for continuous tuning so that the DC power management means draws maximum solar power despite the weather or load conditions. MPPT technology can give a power boost of around 33% over a normal 'shunt' or 'PWM' charge controller.

It will be appreciated that the PoE system may advantageously operate independently of a mains power supply in a reliable manner. The system is therefore well-suited for use in remote locations where mains electricity is not available.

However, in a set of embodiments the DC power management means comprises a connection to the mains power supply. The mains power may be used to supplement the DC power generated by the solar module (e.g. during the winter months) and/or to enable excess solar power to be distributed back to the grid. The DC power management means may therefore comprise an AC/DC converter and/or an inverter to convert the DC power generated by the solar module into a 220 V AC power supply. Where storage cell(s) are provided, the DC power management means may even be arranged to draw AC power from the mains at times when the tariff is low and store this (after conversion) for use by the PoE network at another time.

The DC power management means may be connected to the PoE network by multiple PoE connections, for example via a power injection module. The power injection module may be part of the DC power management means or a separate entity. The power injection module may comprise any number of connection ports for cables of the PoE network. PoE connections suitable for Ethernet cables are usually referred to as RJ45 and may be categorised as 8P8C connectors of the type standardised by IEC 60603-7. The PoE network may comprise CAT5e or CAT6 Ethernet cables.

The Applicant has recognised that an advantage of such a PoE system is that each connection (e.g. RJ45) between the DC power management means and the PoE network can conveniently provide not only power but also a data connection. When the system is installed in a building to provide power to the light fixture(s) in different rooms (or zones of an industrial building, etc.), then each PoE connection can also be used to provide a local internet connection for other devices. This is considered novel and inventive in its own right, and thus when viewed from a second aspect the present invention provides a Power over Ethernet (PoE) system installed in a building comprising multiple light fixtures connected to a PoE network, the system comprising an electrical power supply arranged to supply DC power to the PoE network, the PoE network comprising a PoE connection for each room containing at least one light fixture, wherein one or more of the PoE connections also provides a data connection for other devices. A "room" containing a light fixture could be a zone without walls e.g. in an industrial building. But in a preferred set of embodiments the PoE system is installed in a domestic home and the PoE connections conveniently provide an internet connection in each room for devices other than the light fixture(s).

Benefits of such a PoE system installed in a building may include fast data connections integrated with the power supply for light fixtures, a network that is easy to install using standard connections (e.g. RJ45), and Ethernet cabling that can be more cost effective than conventional mains power wiring. Such a system therefore provides a new approach to networking devices in combination with PoE for lighting. As is discussed above, a PoE network is advantageous for the light fixtures in a building as it allows for centralised control and "smart" control of the lighting (and other devices) by users.

The PoE connection for each room may be split between a power supply to the light fixture(s) and a data connection for other devices. However this means that the light fixture(s) can only be turned on/off without intelligent controls such as local power adjustment e.g. for an LED light. The PoE connection may comprises a data splitter so that there is a data connection to the light fixture(s) as well as for other devices. However a splitter does not usually allow simultaneous data connections to both the light fixture(s) and other devices. This may not be a problem in practice, with the main data connection to other devices in the room only being interrupted temporarily when it is needed to send a control signal to the light fixture(s), but it is not ideal. In a set of embodiments the PoE connection for each room comprises a router so that the light fixture(s) and one or more other devices can be provided with a simultaneous data connection. The router may be wired to a PC or other internet-enabled device, e.g. using an Ethernet cable, and/or it may comprise a wireless router to enable multiple wireless or mobile devices in the vicinity to connect to the internet.

In order to provide for centralised control, it is preferable that the system further comprises a PoE connection to one or more internet-enabled devices for control purposes. To facilitate communication with multiple internet-enabled devices this PoE connection preferably comprises a router. Each internet-enabled device may be directly connected to the router, e.g. by an Ethernet cable, or wirelessly connected. Any internet-enabled device - such as a PC, smart phone or tablet, or smart switch - may then be used to control the other connections in the PoE network. This provides a particularly convenient way for an individual to control the light fixtures in different rooms irrespective of where they are in the building, or even from outside the building. Using a smart switch, an app or a web-based interface, a user may select one or more particular light fixtures to be dimmed or turned on/off. The control functions may conveniently be integrated by the PoE connections being provided by a central control switch. Accordingly the DC power management means may be assisted by a central control switch arranged to control the PoE network.

In embodiments of the second aspect of the invention, the system may use any suitable electrical power supply, for example a mains power supply. The system may comprise an AC/DC converter to convert the mains AC power to DC power for the PoE network. However, in order to enjoy the benefits outlined above with respect to the first aspect of the invention, it is preferable for the system to comprise a solar power supply (either alone or in combination with a mains power supply). Further preferably the solar power supply is connected to DC power management means, preferably comprising one of more storage cells for storing solar power. If the other devices connected to the PoE network in addition to the light fixtures do not rely on a mains power supply then the system can be self-sufficient using only solar power. The other devices may draw power from a PoE connection, and/or they may comprise a battery that can be recharged directly from the solar power supply (or the storage cell(s), where provided).

Thus in a set of embodiments there may be provided a Power over Ethernet (PoE) system installed in a building to supply power and data to, and preferably control, multiple light fixtures and other devices using a solar power source (and preferably only a solar power source). This is considered novel and inventive in its own right, and thus when viewed from a further aspect the present invention provides a Power over Ethernet (PoE) system installed in a building comprising multiple light fixtures connected to a PoE network, the system using a solar power supply connected to a DC power management means to supply DC power to the PoE network, the PoE network comprising a PoE connection for each room containing at least one light fixture, wherein one or more of the PoE connections also provides a data connection for other devices.

There will now be described some preferred features that are applicable to any aspect of the invention.

Either or both of the DC power management means and/or the central control switch (where provided) may be programmable by a user. This is advantageous in that it allows one or more of the use, storage, and supply to or from the grid of power to be actively controlled. This allows the system operation to be optimised for efficiency and cost-effectiveness. For example, the DC power management means could be programmed to control the use, storage and/or supply to or from the grid according to time of day or season, or electricity demand. Thus the DC power management means can improve the system's response to variable power demand and supply levels to optimise the reliability and cost-effectiveness of the system.

A programmable DC power management means is particularly advantageous for embodiments comprising a connection to the mains power grid in addition to a solar module and/or storage cell(s). When the only options for managing power are storing excess energy or using stored energy to meet a load demand, it is straightforward to determine how to use or store energy based on whether there is an energy excess or deficit. When there are additional options of drawing energy from the grid, or selling energy to the grid, it is beneficial to have a programmable DC power management system. The system may be programmed to determine whether to store or sell excess power, or whether to meet load demands with energy from the grid or from a storage cell, e.g. depending on a user's preferences or planned energy usage. For example, if a user plans to use a light fixture during a time of low grid electricity cost, followed by a period of peak grid electricity cost, the user can program the DC power management system to draw energy from the grid first, and stored energy later, when the grid energy cost is higher. A non-programmed system might use up the stored energy first and then use the grid supply once the stored energy has run out. This would lead to the system drawing grid energy during a time of peak cost. It may nevertheless be advantageous for the DC power management system to be programmable, even if the system does not comprise a connection to the mains grid.

The DC power management means and the central control switch (where provided) may be integrated or in communication with each other. In addition, or as an alternative to allowing the central control switch to control and/or be programmed to control light fixtures or other devices according to a user's preferences and requirements of use, the central control switch may be programmed to control light fixtures or other devices depending on a power supply condition determined by the DC power management means. For example, there may be a situation where the central control switch is programmed to turn on a light fixture or other device during a time of peak demand when electricity is expensive, but at that time the energy stored in a storage cell is at a low level. In such an event, the central control switch might be programmed to turn on the light fixture or device at a lower power level, or for a shorter period of time, in response to the low storage cell energy level. Embodiments of the present invention are particularly suited to domestic use. The control and/or programmable functionality of the DC power management means and/or the central control switch may be conveniently integrated into domestic devices that can be configured to communicate with the PoE system, e.g. computers, televisions, remote controls, smart switches, smart phones, tablets, or other commonly used electronic devices. This is advantageous in a domestic setting as a user-friendly interface may be provided for controlling or programming the DC power management means and/or the central control switch. For example, the DC power management means and/or the central control switch may be user-controlled through an app running on a smart phone or other device. Domestic users typically prefer an easy-to-use interface and value the functionality of domestic facilities that are programmable according to their preference, especially if this provides an improved user experience or improved cost-effectiveness. Nevertheless, the PoE system may still be advantageously used in non-domestic settings, e.g. in commerce or industry.

As is mentioned above, the PoE system preferably comprises a central control switch to control the PoE network. The same as in a telecommunications system, the switch may be configured to receive a data message and then transmit the message to a device (e.g. a light fixture or other device in the PoE network) for which it is intended. The central control switch conveniently allows an installer or user to configure the PoE connections to the network, e.g. connecting particular light fixtures to the PoE network. The central control switch preferably comprises an internet connection, thereby enabling remote internet control of the light fixture(s). A user therefore has freedom to remotely adjust the light fixture(s) in the system, e.g. in different parts or rooms of an installation. The central control switch may even be pre-programmed to dim and/or turn light fixtures on/off at different times of the day, for example to simulate occupancy as a deterrent to burglars.

Furthermore, one or more local light control switches may be connected to the central control switch. The central control switch can be configured (and reconfigured) to determine which of the light fixtures is controlled by which of the local switches. When the system is installed in a house, for example, more than one local switch may be connected via the central switch to control a light fixture in the hallway; while a light fixture in the bathroom may only have one dedicated local switch. Each local control switch may enable a user to dim or turn on/off a particular light fixture.

It is preferable that the PoE network is installed for domestic use. The light fixture(s) may therefore consist of domestic light installations. In a preferred set of embodiments the light fixture(s) are installed in the rooms of a home.

The PoE network may be used to deliver DC power to any DC light fixture, and preferably low voltage e.g. 12 V or 24 V light fixtures. One of the advantages of a PoE network is that the light fixture(s) can be actively controlled, for example dimmed, by the PoE input.

According to a preferred set of embodiments the light fixture(s) consist of one or more LED lights. An advantage of LED lights is that they can be highly efficient and operate at the low powers of 60 W or less that are available from a PoE network. Furthermore LEDs are readily available in a range of different colours so the system can be used to control different coloured lighting effects. Standard LEDs and/or organic LEDs (OLEDs) may be used. Preferably each LED light comprises a PoE interface connected to a driver for the LED. Data signals carried to the interface over the PoE network can therefore control the power output of the LED light. In a system comprising multiple light fixtures, individual LED lights can be dimmed or brightened independently. This can be controlled by a central control switch, where one is provided, as described above. Alternatively, or in addition, the PoE interface may enable local control of the associated LED light.

In addition, or alternatively, the light fixture(s) may comprise one or more LED light sources used for direct illumination and/or backlighting. For example, the light fixture(s) may include a screen or display that is backlit by one of more LEDs or OLEDs. The light fixture(s) may include one or more television screens, computer monitors, smart phones, tablet computers, information displays, clocks, etc.

It is an advantage of all aspects of the invention that the PoE connections for a PoE network, e.g. the 8P8C connectors typically known as RJ45, are easy to install. PoE connections also provide a universal power standard; whilst there are differences in the mains plugs between the UK, continental Europe and countries such as the USA, the RJ45 connection (and -48 V voltage of PoE) are standard throughout the world. Furthermore Ethernet cables are inexpensive and can represent a cost saving as compared to mains electrical wiring. The Applicant has therefore recognised that it can be desirable to retrofit a PoE system according to embodiments of the present invention in an existing building or the like to improve the power supply to, and control of, the light fixtures therein. Once installed, the PoE system can be connected to a range of devices using a standard PoE connection, irrespective of country of origin. Moreover such a PoE system can be installed so as to integrate the data and power connections that are entirely separate in a conventional building with mains wiring for the light fixtures.

The present invention therefore extends to a method of retrofitting a PoE system in a building comprising one or more light fixtures connected to a mains power supply, comprising the steps of: installing a solar module to supply electrical power to a PoE network and connecting the PoE network to the light fixture(s). While the PoE network may be used in tandem with a mains power supply, preferably the retrofitting method further comprises disconnecting the mains power supply from the light fixture(s). However, as is discussed above, the mains power supply may be re-connected to a power management means that is also connected to the solar module e.g. if the system is to use solar power as a back-up or to distribute power back to the mains grid. The method may further include installing one or more storage cells connected to the solar module and/or to the mains power supply.

In any of the aspects of the invention, the solar module may be of any suitable kind, for example comprising an array of photovoltaic (PV) cells. The size of the PV cell(s), or of an array of the PV cell(s), can be chosen depending on the power requirements of the PoE network. The solar module may consist of one or more solar panels made up of PV cells. The solar panel(s) may be rigid or they may be flexible or semi-flexible.

Although the present invention has been described thus far in the context of a PoE network for light fixtures, it will be appreciated that the same principles may be applied to any network of relatively low power devices that can be suitably powered by PoE. When viewed from a yet further broad aspect the present invention therefore provides a Power over Ethernet (PoE) system comprising: a solar module comprising at least one photovoltaic cell for generating DC power, DC power management means connected to the solar module, and a PoE network connected to the DC power management means to deliver DC power to one or more low power devices. The low power device(s) may comprise, for example, a telephone, camera, wireless router, security lock, sensor, monitor or the like. Applications may include security surveillance and healthcare monitoring.

Some preferred embodiments of the present invention will now be described, by way of example only, and with reference to the accompanying drawings, in which:
Figure 1 is a schematic diagram of a first embodiment of a smart PoE lighting system using solar power; and
Figure 2 is a schematic diagram of a second embodiment of a smart PoE lighting system using solar power and mains power.

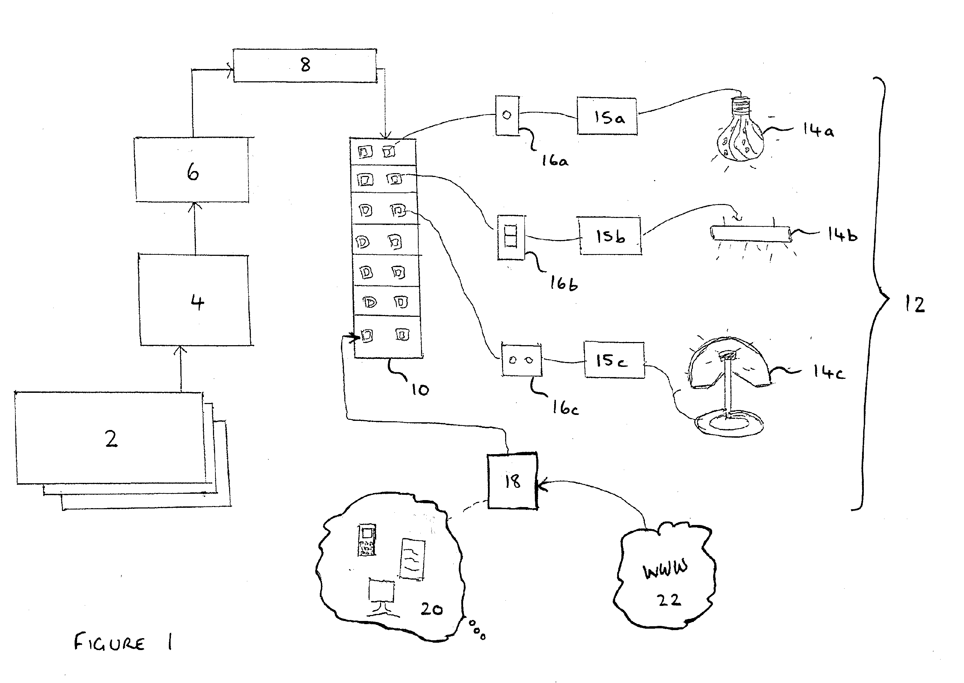

There is seen in Figure 1 one example of a PoE system comprising a solar module 2 e.g. made up of PV panels, a battery charger 4 (optionally with MPPT), a storage battery 6, a power injection system 8, and a central PoE control switch (LAN switch) 10 providing multiple PoE connections for a PoE network 12. The battery charger 4 and storage battery 6, optionally together with the power injection system 8, provide DC power management for the solar power. The DC power management acts to optimise the output power of the solar module 2 and ensure that a substantially constant power level is delivered via the power injection system 8.

The PoE network 12 is installed in a building such as a domestic home using Ethernet cables (e.g. CAT5e cables). Each PoE connection provided by the central control switch 10 can be in the form of a RJ45 plug and socket. In the PoE network 12, various different light fixtures 14a, 14b, 14c have a PoE connection to the central control switch 10. A first light fixture 14a is an LED lightbulb connected via a PoE adapter 15a to a wall switch 16a. A second light fixture 14b is an LED or OLED light tube connected via a PoE adapter 15b to a local switch 16b. A third light fixture 14c is an LED lamp connected via a PoE adapter 15c to an intelligent wall switch 16c. The wall switch 16c may be "intelligent" in that it allows a user to dim the LED lamp 14c using the data connection of the Ethernet cable to control the power output.

The central control switch 10 uses one of the PoE connections to provide a wired or wireless connection to a router 18. The router 18 may be connected to local internet-enabled devices using wired and/or wireless connections. Furthermore the router 18 may connect to the Internet 22 to allow for cloud-based control by remote devices. Thus a user may program or control the PoE connections provided by the central control switch 10 by local or remote means. The router 18 may be similar to a conventional home broadband router with an ADSL connection in the wall.

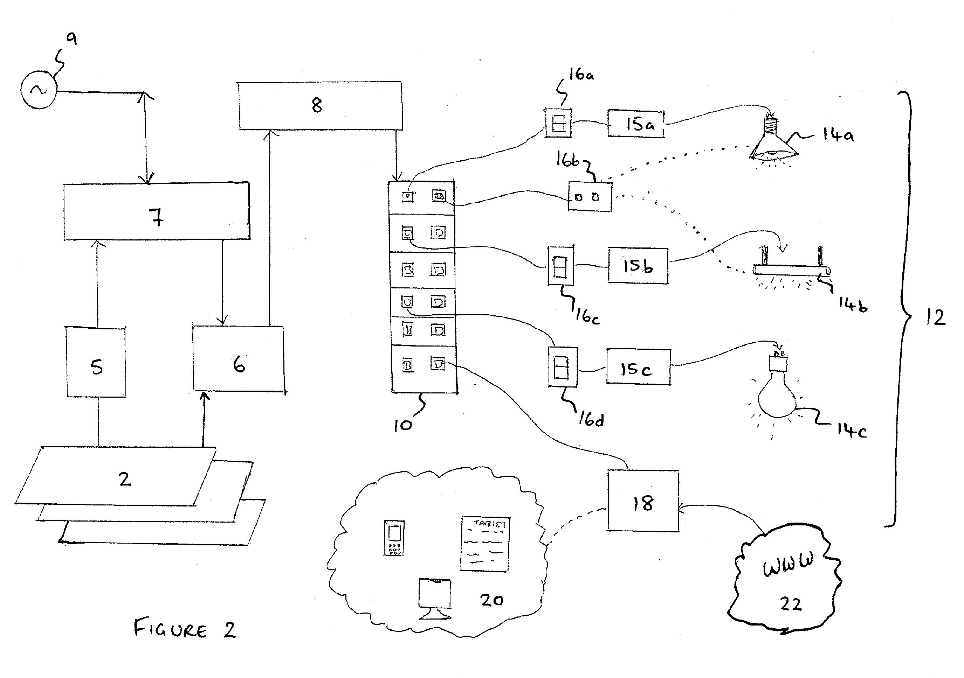

Figure 2 depicts another example of a PoE system comprising a solar module 2 e.g. made up of PV panels. In this embodiment the solar module 2 is connected via an inverter 5 to an AC/DC power management system 7. The power management system 7 is also connected to the mains power supply 9 and to a storage battery 6. Mains AC power can be converted in the power management system 7 and stored in the battery 6 e.g. to top-up the power supply in winter months when solar power alone may not be sufficient to power all equipment in the system. Furthermore, the intelligent power management system 7 can be programmed to draw AC power from the mains 9 to charge the battery 6 at times when the tariff set by the mains utility provider is at its lowest, e.g. during the day. Although not shown, the solar module 2 may also be directly connected to the storage battery 6, optionally via a charge controller such as a MPPT converter, so that locally generated solar power (e.g. during the day) can be stored for use later (e.g. at night time). The system may therefore retain independence from the mains power supply in the event of power cuts and the like.

The power management system 7 is connected via a power injection system 8 to a central PoE control switch (LAN switch) 10 providing multiple PoE connections for a PoE network 12 which is very similar to that described above. In addition to the light fixtures 14a-14c each having PoE connections to the central control switch 10, there is a PoE connection to an intelligent switch 16d that has a data connection and can be used to control one or more of the light fixtures 14a-14c. As before, a router 18 is connected to the central control switch 10 to enable local control by internet-enabled devices 20 and cloud-based control via the Internet 22.

In these PoE systems it is an advantage that each PoE connection in the network 12 includes a data connection in addition to the low voltage power supply. This data connection can be used to control e.g. turn on/off and adjust e.g. dim the various light fixtures 14a-14c. In addition, the PoE connection e.g. RJ45 socket for each room can be provided with a cable splitter or router so as to supply power and/or data to local devices other than the light fixtures. The PoE network 12 can therefore be used to supply high speed Internet throughout a home without separate wall sockets being required. Such integration of power and Internet provides a new approach for modern or retrofitted homes.

Although the examples have been described in the context of LED light fixtures, any suitable low power light fixture or other low power device may be connected in the PoE network 12. For example, a telephone, camera, wireless router, security lock, sensor, monitor or the like, may take advantage of the PoE network 12 instead of or as well as the light fixtures.

Furthermore it will be appreciated that the DC power management means and/or power injection system may be physically integrated with the central PoE control switch so as to provide a single unit for ease of installation.

## Claims

1. A Power over Ethernet (PoE) system comprising:
a solar module comprising at least one photovoltaic cell for generating DC power;
DC power management means connected to the solar module; and
a PoE network connected to the DC power management means to deliver DC power to one or more light fixtures.

2. A system as claimed in claim 1, wherein the DC power management means is connected to the PoE network by multiple PoE connections provided by a central control switch.

3. A system as claimed in claim 2, wherein the central control switch comprises an Internet connection.

4. A system as claimed in claim 2 or 3, wherein the central control switch is programmable by a user.

5. A system as claimed in any of claims 2-4, wherein one or more of the PoE connections also provides a data connection.

6. A system as claimed in claim 5, wherein the data connection is provided for at least one of the light fixtures and/or for one or more other devices.

7. A system as claimed in claim 5 or 6, wherein a PoE connection providing a data connection comprises a router.

8. A system as claimed in any preceding claim, wherein the DC power management means comprises one or more storage cells for storing DC power generated by the solar module.

9. A system as claimed in any preceding claim, wherein the DC power management means comprises a connection to a mains power supply.

10. A system as claimed in claim 9, wherein the DC power management means comprises an AC/DC converter.

11. A system as claimed in claim 10, wherein the DC power management means is arranged to supply DC power converted from the mains power supply to the PoE network and/or to one or more storage cells.

12. A system as claimed in any preceding claim, wherein each light fixture consists of one or more LED lights.

13. A system as claimed in any preceding claim, wherein the PoE network is installed for domestic use.

14. A method of retrofitting a PoE system in a building comprising one or more light fixtures connected to a mains power supply, comprising the steps of:
installing a solar module to supply electrical power to a PoE network; and
connecting the PoE network to the light fixture(s).

15. A method as claimed in claim 14, further comprising: disconnecting the mains power supply from the light fixture(s); and, optionally, re-connecting the mains power supply to a power management means that is connected to the solar module.
